# EUROPÄISCHE PATENTSCHRIFT

(11) **EP 3 241 419 B1**
(45) Veröffentlichungstag und Bekanntmachung des Hinweises auf die Patenterteilung: **27.02.2019**
(21) Anmeldenummer: 17401044.7
(22) Anmeldetag: 27.04.2017
(51) Int. Cl.: A01C 17/00, G01S 7/40, G01S 13/87, G01S 13/88

(54) **VERFAHREN ZUM BETRIEB EINES SENSORSYSTEMS FÜR EINEN SCHLEUDERSTREUER**
METHOD OF OPERATING A SENSOR SYSTEM FOR A CENTRIFUGAL SPREADER
PROCÉDÉ DE FONCTIONNEMENT D'UN SYSTÈME DE DÉTECTION POUR UN ÉPANDEUR CENTRIFUGE

(30) Priorität: 03.05.2016 DE 102016108161
(43) Veröffentlichungstag der Anmeldung: 08.11.2017
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE); Ströbel-Fröschle, Markus, 49124 Georgsmarienhütte (DE)

(56) Entgegenhaltungen:
- EP-A1- 3 017 679
- EP-A1- 3 018 491
- EP-A2- 2 783 560
- WO-A2-02/054099
- US-A1- 2012 293 360

## Beschreibung

Die Erfindung betrifft ein Verfahren zum Betrieb eines Sensorsystems für einen Schleuderstreuer gemäß dem Oberbegriff des Anspruchs 1.
Ein derartiges Sensorsystem wird beispielsweise durch die DE 102013103060 A1 offenbart. Diese zeigt ein Sensorsystem für einen Schleuderstreuer, welches aus einer Mehrzahl von Radarsensoren besteht, welche konzentrisch um das Zentrum einer oder beider Schleuderscheiben des Düngerstreuers angeordnet sind. Die Sensoren dienen zur Erfassung des ausgebrachten Streugutes, so dass aus den Sensordaten auf die Querverteilung des mit der jeweiligen Schleuderscheibe ausgebrachten Gutes zurückgeschlossen werden kann. Die Detektion der Streugutpartikel erfolgt vorzugsweise mittels Radarstrahlen.
Je nachdem, wie die Radarsensoren konfiguriert sind, können sich ein oder mehrere Sensoren des Sensorsystems gegenseitig beeinflussen. Beispielsweise können Radarstrahlen benachbarter Sensoren durch Reflexion an Streugutpartikeln und/oder an Bauteilen des Schleuderstreuers detektiert werden. Dies führt zu verfälschten Messsignalen und einem erhöhten Rauschpegel.

Es ist daher in der nachveröffentlichten DE 102014116021 vorgeschlagen worden, die Radarsensoren, beispielsweise durch Verändern der Betriebsspannung, in ihrer Sende-/Empfangsfrequenz gegeneinander so zu verstimmen, dass die Sensoren sich nicht gegenseitig beeinflussen können. Hierfür ist es vorteilhaft in regelmäßigen Abständen Kalibriermessungen durchzuführen, so dass sich verändernde Rauschpegel der Radarsensoren, beispielsweise durch Temperaturveränderungen oder Drifteffekte, kompensiert werden können. Derartige Kalibriermessungen bzw. Leerlaufmessungen werden vorteilhaft dann durchgeführt, wenn mit der jeweiligen Streuscheibe, an der die Sensoren angeordnet sind, kein Streugut ausgebracht wird.
Problematisch ist diese Vorgehensweise, falls die Kalibrierung bei einseitigem Streuen von Streugut, beispielsweise in gewissen Situationen in der Nähe von Feldgrenzen oder im Vorgewende, durchgeführt wird. Je nachdem, wie der Aufgabepunkt des Düngers auf die Schleuderscheibe orientiert ist, passiert nämlich auch der Dünger der mittels der zweiten der beiden Schleuderscheiben des Schleuderstreuers ausgebracht wurde, zum Teil die Sensoren, welche der ersten der beiden Schleuderscheiben zugeordnet wurden. Dies ist insbesondere deshalb problematisch, weil dies nur sehr lokal, nämlich vorzugsweise im Bereich der Sensoren zwischen den beiden Schleuderscheiben geschieht. Die Messsignale, welche durch diese von der benachbarten Schleuderscheibe ausgebrachten Streugutpartikel erzeugt werden, werden nun also als erhöhtes Rauschen für nur wenige der Sensoren der zweiten Schleuderscheibe betrachtet. Es erhöht sich nicht der Rauschpegel aller Sensoren, sondern nur der von wenigen, so dass insbesondere diese Sensoren rekalibriert werden, mit dem Resultat, dass der wahre Rauschpegel dieser Sensoren sich womöglich sogar erhöht.

Ein weiteres Verfahren zum Betrieb eines Sensorsystems für einen Schleuderstreuer ist offenbart in EP 2 783 560 A2. Aufgabe der vorliegenden Erfindung ist es, ein Verfahren bereitzustellen, welches eine verbesserte Kalibrierung des Sensorsystems ermöglicht, insbesondere beim einseitigen Ausstreuen von Streugut mittels des Schleuderstreuers.
Dieses wird erfindungsgemäß dadurch erreicht, dass Leerlaufmessungen nur dann durchgeführt werden, wenn die zweite Schleuderscheibe kein Streugut ausbringt. Auf diese Weise kann besonders effektiv sichergestellt werden, dass keine Streugutpartikel detektiert werden, wenn die Leerlaufmessung zur Optimierung der Betriebsparameter der Radarsensoren durchgeführt wird. Vorzugsweise wird die Messung der Streugutpartikel und die Regelung des Verteilprozesses durch ein Steuersystem, beispielsweise einen an dem Schleuderstreuer angeordneten Jobrechner oder ein auf einem den Schleuderstreuer ziehenden oder tragenden Traktor angeordnetes Terminal, durchgeführt. Dieses ist nun erfindungsgemäß derart konfiguriert, dass vor jeder Leerlaufmessung der der ersten Schleuderscheibe zugeordneten Sensoren überprüft wird, ob die Verteilung der zweiten Schleuderscheibe ebenfalls deaktiviert ist. Andernfalls wird keine Leerlaufmessung durchgeführt.
In einer vorteilhaften Weiterbildung der Erfindung werden Betriebsparameter zumindest eines Sensors des Sensorsystems, wie vorzugsweise die Sendefrequenz, variiert, falls mittels der Leerlaufmessung ein Rauschniveau zumindest eines Sensors des Sensorsystems ermittelt wurde, welches einen Grenzwert überschreitet. Es wird also ein Grenzwert definiert, bei dessen Überschreitung eine Anpassung der Betriebsparameter des jeweiligen Sensors vorgesehen ist. Dieser Grenzwert kann entsprechend zweier alternativer Ausgestaltungen entweder als absoluter oder relativer Grenzwert definiert sein. Bei Festlegung eines absoluten Grenzwertes erfolgt bei der Überschreitung dieses Grenzwertes des Rauschniveaus durch einen Sensor eine Anpassung der Betriebsparameter. Bei Festlegung eines relativen Grenzwertes wird das Verhältnis der Rauschniveaus eines Sensors zu einem oder mehreren anderen Sensoren oder zum Durchschnitt aller anderen Sensoren betrachtet und bei Überschreiten eines festgelegten Wertes für das Verhältnis eine Anpassung der Betriebsparameter vorgenommen. Es kann auch ein relativer und ein absoluter Grenzwert definiert sein und eine Anpassung der Betriebsparameter des Sensors vorgenommen werden, wenn einer der Grenzwerte für diesen Sensor überschritten wird. Zur Anpassung der Betriebsparameter wird vorzugsweise die Sendefrequenz durch Veränderung der Betriebsspannung der Sensoren verändert. Eine Veränderung der Betriebsspannung der Sensoren hat typischerweise einen direkten Einfluss auf die Sende-/Empfangsfrequenz des jeweiligen Sensors.

In einer vorteilhaften Weiterbildung der Erfindung wird zumindest ein weiterer Parameter der Verteilcharakteristik, wie vorzugsweise die Wurfweite, mittels eines berührungslos arbeitenden und vom ersten Sensorsystem unabhängigen zweiten Sensorsystems bestimmt, wobei eine Anpassung zumindest eines Betriebsparameters zumindest eines Sensors des zweiten Sensorsystems erfolgt, wenn mittels der Anpassung von Betriebsparametern des ersten Sensorsystems das Rauschniveau zumindest eines Sensors des ersten Sensorsystem nicht unter den festgelegten Grenzwert reduziert werden kann. Das erste Sensorsystem, bestehend beispielsweise aus konzentrisch um die jeweilige Streuscheibe angeordneten Radarsensoren, dient vorzugsweise zur Bestimmung und Charakterisierung der Querverteilung des Streugutes. Beispielsweise kann mittels dieses Sensorsystems der mittlere Abwurfwinkel des verteilten Streugutes bestimmt werden.

Eine Wurfweitenermittlung ist mittels dieses Sensorsystems aufgrund seiner Lage in der Nähe der Schleuderscheiben nur schwer möglich. Der Grund ist einerseits, dass sich in unmittelbarer Nähe der Schleuderscheibe die Flugeigenschaften des Düngers kaum auf die Geschwindigkeit der Partikel ausgewirkt haben. Außerdem werden die Streugutpartikel typischerweise direkt von unten oder oben mit Radarstrahlen beaufschlagt, so dass sich aus den gemessenen Radarstrahlen kein Dopplersignal extrahieren lässt, welches zur Geschwindigkeitsbestimmung in Wurfrichtung, welche annähernd senkrecht zur Ausbreitungsrichtung der Radarstrahlen verläuft, geeignet wäre. Zur Wurfweitenermittlung ist daher ein zweites Sensorsystem vorgesehen, welches weiter oben am Schleuderstreuer angebracht ist und die Düngerpartikel derselben Schleuderscheibe zu einem späteren Zeitpunkt der Flugbewegung mit Radarstrahlen beaufschlagt. Zu diesem späteren Zeitpunkt der Flugbewegung haben sich die Flugeigenschaften der Streugutpartikel bereits signifikant auf die Bewegungsgeschwindigkeit ausgewirkt, so dass eine Prognose des weiteren Verlaufes der Flugbahn möglich ist. Zudem ist auf Grund des flacheren Messwinkels im Vergleich zur Flugbahn auch eine Geschwindigkeitsmessung aus dem Dopplersignal der Radarmessung möglich. Die unterschiedlichen Lagen und Orientierungen des ersten und zweiten Sensorsystems können nun zu einer Beeinflussung der Messungen und/oder einem erhöhten Rauschen des jeweils anderen Sensorsystems führen. Wenn nun durch Anpassung der Betriebsparameter des ersten Sensorsystems das Rauschniveau eines oder mehrerer Sensoren des ersten Sensorsystems nicht in gewünschter Weise reduziert werden kann, ist erfindungsgemäß vorgesehen, die Betriebsparameter eines oder mehrerer Sensoren des zweiten Sensorsystems anzupassen, um das Rauschniveau des ersten Sensorsystems bzw. eines oder mehrerer seiner Sensoren zu reduzieren. Umgekehrt kann natürlich auch eine Anpassung der Betriebsparameter des ersten Sensorsystems vorgesehen sein, um das Rauschniveau des zweiten Sensorsystems zu reduzieren.
In einer vorteilhaften Ausgestaltung der Erfindung wird nach jeder Anpassung der Betriebsparameter eine erneute Leerlaufmessung zur Überprüfung durchgeführt und/oder nach einer festgelegten Wartezeit eine Leerlaufmessung durchgeführt.
In einer vorteilhaften Weiterbildung wird nach einer festgelegten Anzahl von aufeinanderfolgenden Variationen eines oder mehrerer Betriebsparameter, bei denen keine ausreichende Rauschreduktion erreicht werden konnte, eine Fehlermeldung an den Nutzer des Systems ausgegeben und die gemessenen Werte nicht weiter für die Regelung des Schleuderstreuers verwendet. Auf diese Weise können Fehlfunktionen des Systems erkannt und eine Fehlsteuerung des Schleuderstreuers verhindert werden.

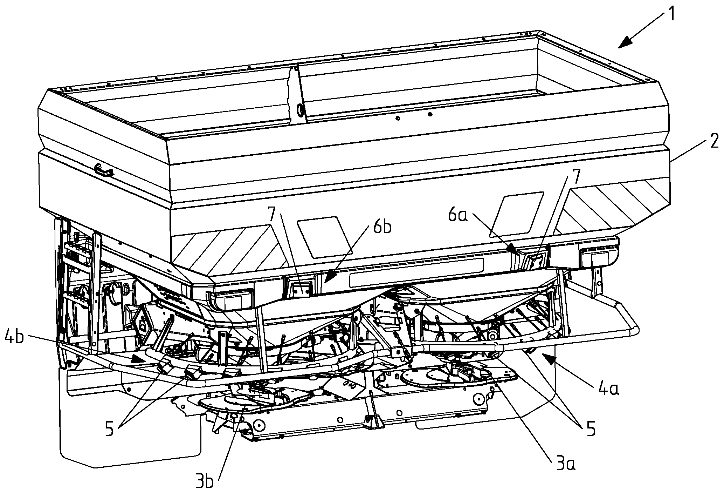

Weitere vorteilhafte Ausgestaltungen ergeben sich aus der Figurenbeschreibung. Hierbei zeigt die Figur einen Schleuderstreuer zur Durchführung des erfindungsgemäßen Verfahrens.

Gezeigt ist in der Figur der Schleuderstreuer 1, welcher üblicherweise während der Feldarbeit an einen hier nicht dargestellten Traktor mittels einer Dreipunktkupplung angebaut ist. Der Schleuderstreuer 1 verfügt über einen Vorratsbehälter 2 zur Aufbewahrung von Streugut. Dieses wird mittels der Streuscheiben 3a ,3b in Breitverteilung auf dem Boden ausgestreut. In der Nähe der Streuscheiben ist jeweils ein erstes Sensorsystem 4a, 4b zur Ermittlung von Parametern der Querverteilung des ausgebrachten Streugutes angeordnet. Die Sensoren 5 des ersten Sensorsystems sind hier konzentrisch um die jeweilige Streuscheibe an einer entsprechenden Halterung fest installiert. Es sind auch andere, beispielsweise nicht konzentrische oder variable, insbesondere bewegliche, Anordnungen der Sensoren 5 denkbar.

Weiter oben an dem Vorratsbehälter 2 des Schleuderstreuers ist ein zweites Sensorsystem 6a, 6b zur Ermittlung weiterer Parameter des Verteilvorganges des Streugutes, insbesondere der Wurfweite, angeordnet. Das Sensorsystem 6a, 6b besteht in diesem Fall nur aus jeweils einem einzigen Sensor 7, es können jedoch auch mehrere Sensoren das jeweilige Sensorsystem 6a, 6b bilden.

Durch hier nicht dargestellte Reflexion oder Streuung von Radarsignalen an Bauteilen des Schleuderstreuers 1 oder Objekten in dessen Umgebung kann es nun zur gegenseitigen Beeinflussung der Sensoren 5 des Sensorsystems 4a, 4b untereinander oder der gegenseitigen Beeinflussung der Sensorsysteme 4a, 4b und 6a, 6b kommen, was zu einem erhöhten Rauschniveau der betroffenen Sensoren und/oder zu verfälschten Messergebnissen führen kann.

Zur Minimierung des Rauschniveaus ist nun erfindungsgemäß vorgesehen, dass in regelmäßigen Abständen Leerlaufmessungen zur Anpassung der Betriebsparameter der jeweiligen Sensoren durchgeführt werden. Hierfür wird das Rauschniveau der Sensoren 5 und 7 bei ausgeschaltetem Verteilvorgang bestimmt. Es ist nun vorgesehen, dass vor der Leerlaufmessung eine Überprüfung stattfindet, ob beispielsweise der Verteilvorgang der Schleuderscheibe 3a, welcher das Sensorsystem 4a zugeordnet ist, ausgeschaltet ist und ob der Verteilvorgang der Schleuderscheibe 3b, welcher das Sensorsystem 4a nicht zugeordnet ist, ausgeschaltet ist. Nur wenn beide Verteilvorgänge ausgeschaltet sind, wird eine Leerlaufmessung und eine entsprechende Anpassung der Betriebsparameter durchgeführt. Andernfalls kann eine Beeinflussung der Messergebnisse durch Streugutpartikel, welche von der benachbarten Schleuderscheibe 3b in den Messbereich der zu kalibrierenden Sensoren geworfen werden, zu einer nachteiligen Anpassung der Betriebsparameter führen. Eine analoge Überprüfung der Verteilvorgänge findet ebenfalls bei Leerlaufmessungen des Sensorsystems 4b statt. Auch können natürlich die Sensoren der zweiten Sensorsystem 6a, 6b einer Leerlaufmessung unterzogen werden, um das jeweilige Rauschniveau zu optimieren. Die Vorgehensweise ist dann analog.

Die Anpassung der Betriebsparameter findet bei zu hohem Rauschniveau für den jeweiligen Sensor 5 statt. Eine Anpassung kann beispielsweise erfolgen, wenn ein festgelegter Grenzwert überschritten wurde. Hierbei kann es sich um einen Absolutwert für das Rauschniveau handeln oder einen Relativwert, welcher einem Vergleich von einem zu mehreren anderen Sensoren oder dem mittleren Rauschen aller anderen Sensoren zugrunde liegt.

Wird der entsprechende Grenzwert überschritten, so findet also eine Anpassung der Betriebsparameter des betrachteten Sensors 5, 7 statt. Vorzugsweise wird die Sende-/Empfangsfrequenz des Sensors modifiziert, um so das Rauschniveau zu senken. Hierfür kann vorgesehen sein, bei der Modifikation die derzeitigen Betriebsparameter der weiteren Sensoren zu berücksichtigen. Eine Anpassung der Sende-/Empfangsfrequenz findet vorzugsweise durch Anpassung der Betriebsspannung der jeweiligen Sensoren 5, 7 statt. Eine anschließend durchgeführte weitere Leerlaufmessung kann zur Beurteilung der Auswirkungen der angepassten Betriebsparameter dienen. Führt diese Anpassung nicht zu dem gewünschten Erfolg, so können die Betriebsparameter anderer Sensoren desselben Sensorsystem ebenfalls modifiziert und in einem weiteren Schritt auch die Betriebsparameter des derselben Schleuderscheibe zugordneten zweiten Sensorsystems 6a bzw. dessen Sensoren 7. Wird wiederholt keine ausreichende Reduktion des Rauschniveaus erreicht, kann vorgesehen sein, dass der Verteilvorgang und/oder die Regelung mittels des entsprechenden Sensorsystems abgebrochen und/oder ein Warnhinweis an den Nutzer ausgegeben wird.

Das hier beschriebene Verfahren wird mittels eines nicht dargestellten Steuersystems durchgeführt, welches die Betriebsparameter der Sensorsysteme steuert und die Messwerte der Sensorsysteme empfängt. Es ist weiter dazu ausgebildet diese Messergebnisse zu analysieren und die Einstellparameter des Schleuderstreuers entsprechend der aktuell ermittelten Verteilparameter zu regeln. Das Steuersystem kann beispielsweise als an dem Schleuderstreuer 1 angeordneter Jobrechner ausgebildet sein oder es kann sich ein entsprechend konfiguriertes Terminal oder ein entsprechender Jobrechner auf dem an den Schleuderstreuer 1 angekoppelten Traktor befinden. Die oben beschriebenen Grenzwerte für die Rauschniveaus und sonstige Parameter, wie die Anzahl der Wiederholungen, bis der Regelvorgang abgebrochen wird, können in dem Steuersystem hinterlegt sein oder durch eine Nutzereingabe an das Steuersystem übergeben werden.

Die hier beschriebenen Sensoren arbeiten als Radarsensoren zur Bestimmung von Parametern der Verteilcharakteristik eines Schleuderstreuers 1. Es sind natürlich auch Sensoren zur Bestimmung der Verteilcharakteristik denkbar, welche auf anderen optischen oder akustischen Prinzipien beruhen, beispielsweise Ultraschallsensoren.

## Patentansprüche

1. Verfahren zum Betrieb eines Sensorsystems (4, 6) für einen Schleuderstreuer (1) zur Ausbringung von landwirtschaftlichem Gut, vorzugsweise Dünger, wobei das Gut mittels zwei Schleuderscheiben (3) in Breitverteilung ausgebracht wird, wobei zumindest ein Parameter die Verteilcharakteristik des Schleuderstreuers (1) betreffend mittels zumindest eines ersten Sensorsystems (4a,4b), bestehend aus zumindest zwei berührungslos arbeitenden ersten Sensoren (5), vorzugsweise Radarsensoren, bestimmbar ist, wobei das erste Sensorsystem (4a, 4b) einer ersten Schleuderscheibe (3a, 3b) zugeordnet ist und zumindest überwiegend Parameter der Verteilcharakteristik dieser ersten Schleuderscheibe (3a, 3b) ermittelt, wobei Leerlaufmessungen zur Detektion des Rauschniveaus der zumindest zwei Sensoren (5) nur dann durchgeführt werden, wenn die erste Schleuderscheibe (3a, 3b) kein Gut ausbringt, wobei
Leerlaufmessungen nur dann durchgeführt werden, wenn ebenfalls die zweite Schleuderscheibe (3b, 3a) kein Streugut ausbringt,
**dadurch gekennzeichnet, dass**
zumindest ein weiterer Parameter der Verteilcharakteristik, wie vorzugsweise die Wurfweite, mittels eines berührungslos arbeitenden und vom ersten Sensorsystem (4a, 4b) unabhängigen zweiten Sensorsystems (6a, 6b) bestimmt wird, wobei eine Anpassung zumindest eines Betriebsparameters zumindest eines Sensors (7) des zweiten Sensorsystems (6a, 6b) erfolgt, wenn mittels der Anpassung von Betriebsparametern des ersten Sensorsystems (4a, 4b) das Rauschniveau zumindest eines Sensors (5) des ersten Sensorsystems (4a, 4b) nicht unter den festgelegten Grenzwert reduziert werden kann.

2. Verfahren nach Anspruch 1, **dadurch gekennzeichnet, dass** Betriebsparameter zumindest eines Sensors (5) des ersten Sensorsystems (4a, 4b), wie vorzugweise die Sendefrequenz, variiert werden, falls mittels der Leerlaufmessung ein Rauschniveau zumindest eines Sensors (5) des Sensorsystems (4a, 4b) ermittelt wurde, welches einen Grenzwert überschreitet.

3. Verfahren nach Anspruch 2, **dadurch gekennzeichnet, dass** der Grenzwert als absoluter Grenzwert in dem Sensorsystem (4a, 4b) oder einem dem Sensorsystem zugeordneten Steuersystem hinterlegt ist.

4. Verfahren nach Anspruch 2 oder 3, **dadurch gekennzeichnet, dass** der Grenzwert als relativer Grenzwert zum Vergleich der Rauschniveaus der zumindest zwei Sensoren (5) in dem Sensorsystem (4a, 4b) oder einem dem Sensorsystem zugeordneten Steuersystem hinterlegt ist.

5. Verfahren nach zumindest einem der vorstehenden Ansprüche, **dadurch gekennzeichnet, dass** das erste und das zweite Sensorsystem (4a, 4b, 6a, 6b) verschiedene Parameter der Verteilcharakteristik derselben Schleuderscheibe ermitteln.

6. Verfahren nach zumindest einem der Ansprüche 2 - 5, **dadurch gekennzeichnet, dass** das Verfahren nach einer Anpassung der Betriebsparameter und/oder einer festgelegten Wartezeit erneut durchgeführt wird.

7. Verfahren nach einem der vorhergehenden Ansprüche, **dadurch gekennzeichnet, dass** nach einer festgelegten Anzahl von aufeinanderfolgenden Variationen eines oder mehrerer Betriebsparameter, bei denen keine ausreichende Rauschreduktion erreicht werden konnte, eine Fehlermeldung an den Nutzer des Systems ausgegeben wird und die gemessenen Werte nicht weiter für die Regelung des Schleuderstreuers (1) verwendet werden.

## Claims

1. Method for operating a sensor system (4, 6) for a centrifugal spreader (1) for discharging agricultural material, preferably fertiliser, wherein the material is discharged in a broad distribution by means of two spreader discs (3), wherein at least one parameter relating to the distribution characteristic of the centrifugal spreader (1) can be determined by means of at least one first sensor system (4a, 4b), composed of at least two first sensors (5), preferably radar sensors, which operate in a contactless fashion, wherein the first sensor system (4a, 4b) is assigned to a first centrifugal disc (3a, 3b), and determines at least mainly parameters of the distribution characteristic of this first centrifugal disc (3a, 3b), wherein idling measurements for detecting the noise level of the at least two sensors (5) are carried out only when the first centrifugal disc (3a, 3b) does not discharge any material, wherein idling measurements are carried out only when the second centrifugal disc (3b, 3a) does not discharge any spreading material either,
**characterized in that**
at least one further parameter of the distribution characteristic, such as preferably the throwing distance, is determined by means of a second sensor system (6a, 6b) which operates in a contactless fashion and is independent of the first sensor system (4a, 4b), wherein at least one operating parameter of at least one sensor (7) of the second sensor system (6a, 6b) is adapted if the noise level of at least one sensor (5) of the first sensor system (4a, 4b) cannot be reduced below the defined limiting value by means of the adaptation of operating parameters of the first sensor system (4a, 4b).

2. Method according to Claim 1, **characterized in that** operating parameters of at least one sensor (5) of the first sensor system (4a, 4b), such as preferably the transmission frequency, are varied if a noise level of at least one sensor (5) of the sensor system (4a, 4b) which exceeds a limiting value has been determined by means of the idling measurement.

3. Method according to Claim 2, **characterized in that** the limiting value is stored as an absolute limiting value in the sensor system (4a, 4b) or a control system which is assigned to the sensor system.

4. Method according to Claim 2 or 3, **characterized in that** the limiting value is stored as a relative limiting value for comparing the noise levels of the at least two sensors (5) in the sensor system (4a, 4b) or a control system which is assigned to the sensor system.

5. Method according to at least one of the preceding claims, **characterized in that** the first and second sensor systems (4a, 4b, 6a, 6b) determine different parameters of the distribution characteristic of the same centrifugal disc.

6. Method according to at least one of Claims 2-5, **characterized in that** the method is carried out again after adaptation of the operating parameters and/or a defined waiting time.

7. Method according to one of the preceding claims, **characterized in that** after a defined number of successive variations of one or more operating parameters during which it was not possible to achieve any sufficient noise reduction, a fault message is output to the user of the system and the measured values are not used any more for the control of the centrifugal spreader (1).

## Revendications

1. Procédé pour faire fonctionner un système de détection (4, 6) pour un épandeur centrifuge (1) destiné à l'application d'une substance agricole, en particulier d'engrais, dans lequel on applique la substance en nappe au moyen de deux disques centrifuges (3), dans lequel au moins un paramètre concernant la caractéristique de distribution de l'épandeur centrifuge (1) peut être déterminé au moyen d'au moins un premier système de détection (4a, 4b), se composant d'au moins deux premiers capteurs opérant sans contact (5), de préférence des capteurs radar, dans lequel le premier système de détection (4a, 4b) est associé à un premier disque centrifuge (3a, 3b) et détermine principalement des paramètres de la caractéristique de distribution de ce premier disque centrifuge (3a, 3b), dans lequel on effectue des mesures à vide pour la détection du niveau de bruit desdits au moins deux capteurs (5) uniquement lorsque le premier disque centrifuge (3a, 3b) n'applique pas de substance, dans lequel on effectue des mesures à vide uniquement lorsque le deuxième disque centrifuge (3b, 3a) n'applique également pas de substance,
**caractérisé en ce que** l'on détermine au moins un autre paramètre de la caractéristique de distribution, comme de préférence la largeur d'épandage, au moyen d'un deuxième système de détection (6a, 6b) opérant sans contact et indépendant du premier système de détection (4a, 4b), dans lequel on procède à une adaptation d'au moins un paramètre de fonctionnement d'au moins un capteur (7) du deuxième système de détection (6a, 6b), lorsque le niveau de bruit d'au moins un capteur (5) du premier système de détection (4a, 4b) ne peut pas être réduit sous la valeur limite fixée, au moyen de l'adaptation de paramètres de fonctionnement du premier système de détection (4a, 4b).

2. Procédé selon la revendication 1, **caractérisé en ce que** l'on fait varier des paramètres de fonctionnement d'au moins un capteur (5) du premier système de détection (4a, 4b), comme par exemple la fréquence d'émission, dans le cas où on a déterminé au moyen de la mesure à vide un niveau de bruit d'au moins un capteur (5) du premier système de détection (4a, 4b), qui dépasse une valeur limite.

3. Procédé selon la revendication 2, **caractérisé en ce que** la valeur limite est mémorisée sous forme de valeur limite absolue dans le système de détection (4a, 4b) ou un système de commande associé au système de détection.

4. Procédé selon la revendication 2 ou 3, **caractérisé en ce que** la valeur limite est mémorisée sous forme de valeur relative à comparer au niveau de bruit desdits au moins deux capteurs (5) dans le système de détection (4a, 4b) ou dans un système de commande associé au système de détection.

5. Procédé selon au moins une des revendications précédentes, **caractérisé en ce que** le premier et le deuxième systèmes de détection (4a, 4b, 6a, 6b) déterminent des paramètres différents de la caractéristique de distribution du même disque centrifuge.

6. Procédé selon au moins une des revendications 2 à 5, **caractérisé en ce que** l'on exécute de nouveau le procédé après une adaptation des paramètres de fonctionnement et/ou un temps d'attente défini.

7. Procédé selon l'une quelconque des revendications précédentes, **caractérisé en ce qu'**après un nombre défini de variations successives d'un ou de plusieurs paramètre(s) de fonctionnement, pour lesquelles il n'a pas été possible d'obtenir une réduction suffisante du bruit, on adresse un message d'erreur à l'utilisateur du système et on n'utilise plus les valeurs mesurées pour la régulation de l'épandeur centrifuge (1).
